Europäisches Patentamt

European Patent Office

Office européen des brevets

(11) Publication number: **0 229 733 B1**

## EUROPEAN PATENT SPECIFICATION

(45) Date of publication of patent specification: **13.05.92**

(51) Int. Cl.⁵: **H01G  4/42,** H01G 4/38

(21) Application number: **87300385.9**

(22) Date of filing: **16.01.87**

(54) **Through-type twin capacitor.**

(30) Priority: **17.01.86 JP 4760/86 U**
**05.02.86 JP 15583/86 U**
**14.04.86 JP 55916/86 U**

(43) Date of publication of application:
**22.07.87 Bulletin  87/30**

(45) Publication of the grant of the patent:
**13.05.92 Bulletin  92/20**

(84) Designated Contracting States:
**DE GB NL**

(56) References cited:
**BE-A- 454 272**
**DE-A- 1 439 298**
**US-A- 4 370 698**

(73) Proprietor: **TDK Corporation**
**13-1, Nihonbashi 1-chome Chuo-Ku**
**Tokyo-to(JP)**

(72) Inventor: **Sasaki, Setsuo**
**3-18 Torimori Aza Hirasawa**
**Nikaho-machi Yuri-gun Akita(JP)**
Inventor: **Koganebuchi, Mutsuo**
**2-449 Shinmichishita Aza Numada**
**Nishime-machi Yuri-gun Akita(JP)**
Inventor: **Taguchi, Teruo**
**54-83 Obanazawa Aza Ishiwaki**
**Honjo-shi Akita(JP)**

(74) Representative: **Rackham, Stephen Neil et al**
**GILL JENNINGS & EVERY 53-64 Chancery Lane**
**London WC2A 1HN(GB)**

EP 0 229 733 B1

## Description

This invention relates to a through-type twin high electric strength capacitor and, in particular, to a capacitor for use in a noise filter in a high-power high-frequency apparatus, such as a microwave oven, a broadcasting transmitter or an X-ray generator.

In a high-frequency high-power apparatus operating in the VHF or UHF band, it is important to remove noise which is superposed on the commercial power line. In view of this, a noise filter, which is actually a lowpass filter, is generally inserted in the power supply line of such apparatus.

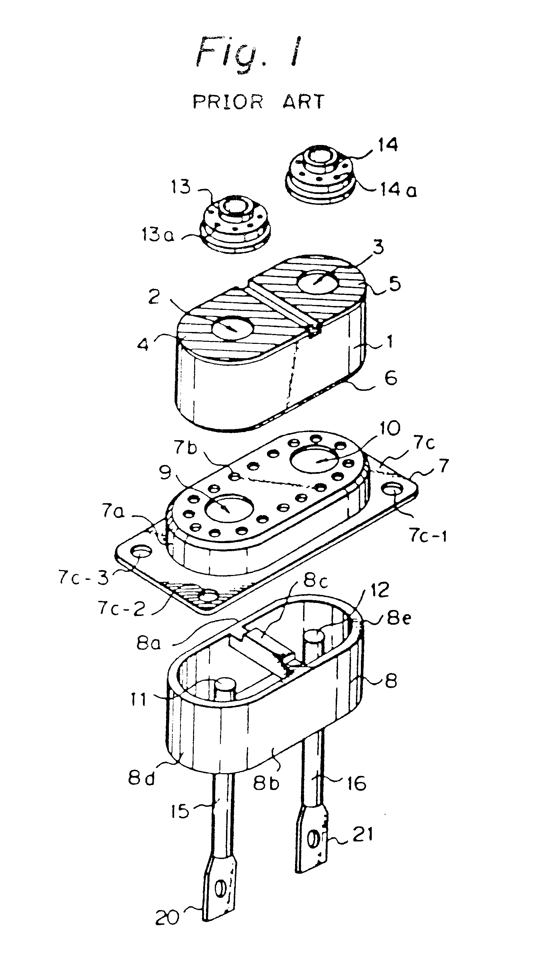

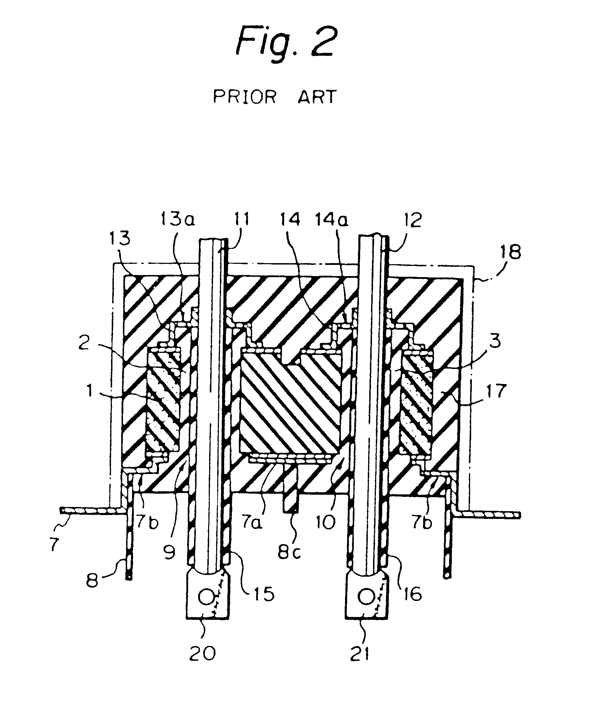

Referring to Figs. 1 and 2 of the accompanying drawings, a conventional trough type twin capacitor as disclosed, for example, in U.S. Patent 4 370 698 has an elliptical ceramic body 1 which has a pair of holes 2 and 3 through its thickness. On the upper surface of the ceramic body 1 there are mounted a pair of spaced-apart electrodes 4 and 5 having corresponding through holes and, on the lower surface thereof, there is mounted a common electrode 6 having corresponding through holes. A ground conductor 7 comprises a rectangular plate 7c and a raised portion 7a. The plate 7c has four holes 7c-1 to 7c-4 for fixing the capacitor assembly to a filter housing (not shown) by means of screws. The raised portion 7a has a pair of through holes 9 and 10 which correspond to the holes 2 and 3, respectively, of the ceramic body 1. The raised portion 7a also has a number of through holes 7b round its periphery. The common electrode 6 is brought into contact with the raised portion 7a of the ground conductor 7 so that the holes 9 and 10 are aligned with the holes 2 and 3, respectively, and so that the holes 7b are positioned outside the ceramic body 1. A pair of elongate through conductors 11 and 12 have tab terminals 20 and 21, which are to be coupled with socket terminals of an external circuit (not shown). The rods 11 and 12 are inserted into the holes 9 and 10 of the ground conductor 7 and the holes 2 and 3 of the ceramic body 1, respectively. The rods 11 and 12 are covered with flexible insulating tubes 15 and 16, respectively, made of, for example, silicon rubber, in order to ensure insulation of the common electrode 6 from the rods 11 and 12. The insulation tubes 15 and 16 also act to absorb shrinkage stress generated in an injected filler 17 during the heating and hardening process thereof, and thereby to prevent the occurrence of cracks or the like in the hardened filler 17. The rods 11 and 12 also pass through metallic caps 13 and 14, which are mounted on the electrodes 4 and 5, respectively. The rods 11 and 12 are then soldered to the caps 13 and 14, respectively. The caps 13 and 14 also have raised portions having a number of peripheral small holes 13a and 14a, respectively. Beneath the ground conductor 7 there is attached a hollow elliptical cylindrical plastic cover 8 so that it encloses the rods 11 and 12 with the tubes 15 and 16. The lower end of the cover 8 is designed to project slightly beyond the lower ends of the tubes 15 and 16. The cover 8 is generally an elliptically-shaped column having a pair of parallel long linear walls 8a and 8b, and a pair of half-circular walls 8d and 8e connecting the linear walls. The cover 8 has a bridge 8c across the top portion joining the centres of the parallel long linear walls 8a and 8b so that the bridge 8c separates the space in the cover 8 into two generally D-shaped areas.

The insulating filler 17, which is, for instance, an epoxy resin, surrounds the ceramic body 1, the caps 13 and 14 and the rods 11 and 12, as shown in Fig. 2. In the process of injecting the insulating filler 17, the capacitor body is covered with a cover 18 and the filler 17 is then injected into the cover 18 through the opening at the bottom of the cover 8. The insulating filler injected from the bottom passes through the holes 7b provided in the ground conductor 7, and the holes 13a and 14b provided in the caps 13 and 14, and the inner region of the cover 18 is filled with the insulating filler 17. After the filler thus injected has hardened, the cover 18 is removed and the twin capacitor assembly is completed. Consequently, electrical insulation, as well as protection against oil, moisture and/or dust, are ensured by the injected epoxy resin.

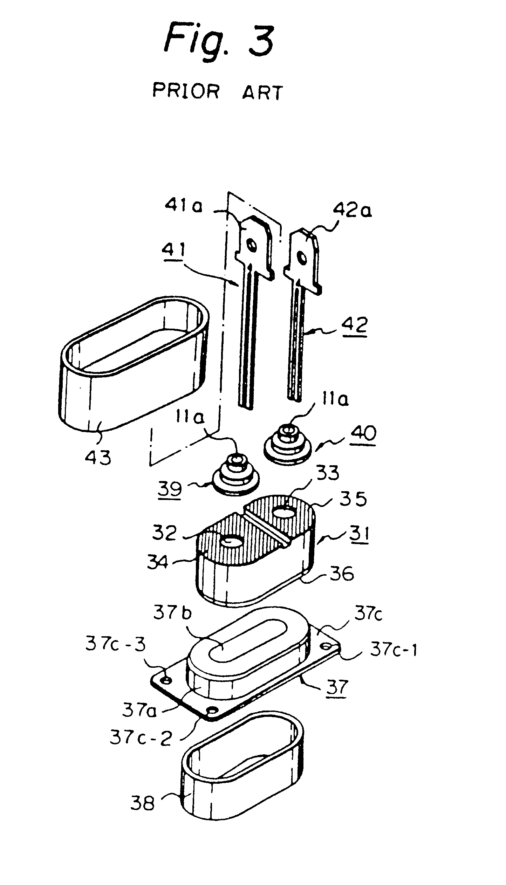

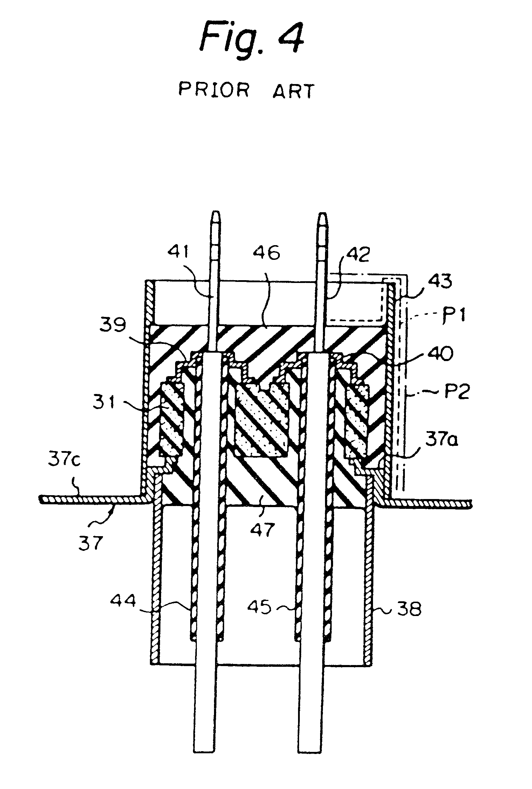

Another conventional through-type twin capacitor is illustrated in Figs. 3 and 4 of the accompanying drawings (see also Japanese Utility Model Laid-Open Publication No. 106330/85, for example). An elliptical ceramic body 31 has a pair of holes 32 and 33 through its thickness. On the upper surface of the ceramic body 31 there are mounted a pair of separated electrodes 34 and 35 having corresponding through holes and to the lower surface thereof there is attached a common electrode 36 having corresponding through holes. A ground conductor 37 has a rectangular plate 37c as well as a raised portion 37a. The plate 37c has four through holes 37c-1 to 37c-4 for fixing the capacitor to a filter housing (not shown). The raised portion 37a has a generally elliptical through hole 37b. The common electrode 36 is brought into contact with the raised portion 37a of the ground conductor 37. A pair of elongate through conductors 41 and 42, at the upper ends of which there are integrally formed tabs 41a and 42a, are inserted through metallic caps 39 and 40, the holes 32 and 33 and the elliptical hole 37b. The rods 412 and 42 are soldered to the metallic caps 39 and 40, which are mounted on the electrodes 34 and 35, respectively. The rods 41 and 42 are also covered with flexible insulating tubes 44 and 45, respectively, for the same purpose as the tubes 15 and 16 described perviously. To the ground conductor 37 is attached a hollow elliptical cylindrical plastics cover 38 so that the cover encloses the lower portions of the rods 41 and 42 covered with the tubes 44 and 45. In this arrangement it should be noted that the lower end of the cover 38 is designed to project slightly beyond the lower ends of the tubes 44 and 45, as shown in Fig. 4. On the ground conductor 37 is mounted another hollow elliptical cylindrical plastics cover 43, so that the cover encloses the ceramic body 31, the caps 39 and 40 and the upper portions of the rods 41 and 42, as shown in Fig. 4.

Epoxy resin is injected through the openings of the lower cover 38 and the upper cover 43. This is because the metallic caps 39 and 40 and the raised portion 37a do not have the through holes as shown in Figs. 1 and 2, and the assembly is thereby completely separated into two housings. An insulating filler 46 surrounds the outside portions of the ceramic body 31 and the caps 39 and 40, and the upper portions of the rods 41 and 42. Another insulating filler 47 surrounds the inside portion of the body 31, the caps 39 and 40 and the centre portion of the rods 41 and 42 covered by the tubes 44 and 45.

However, the conventional capacitor of Figs 1 and 2 has the following disadvantages. As described in the foregoing, the lower free end of the cover 8 is designed so as to project slightly beyond the lower ends of the silicon tubes 15 and 16. We found that, in this arrangement, a discharge between the tabs 20, 21 and the ground conductor 7 may be initiated even when a relatively low voltage is applied to the capacitor. This discharge is appreciable if the capacitor is used under oily, dusty and/or moist conditions such as occur in a kitchen, where a large amount of oil, dust and/or moisture can be expected to be deposited on the tabs 20 and 21, the exposed bottom surface of the filler 17 and/or the cover 8.

Secondly, the filler 17 is injected through the opening of the cover 8 after the rods 11 and 12 having the tabs 20 and 21 are inserted into the holes 9 and 10, the holes 2 and 3 and the metallic caps 13 and 14, respectively. Therefore, in the process of injecting the filler, there is a possibility that the insulating resin may be accidentally deposited on the surfaces of the tabs 20 and 21. This would prevent the establishment of good electrical connection between the tabs and the socket terminals (not shown) which are attached to the tabs.

The other conventional through-type twin capacitor of Figs. 3 and 4 has the following disadvantages in addition to the same disadvantages as the capacitor of Figs. 1 and 2. If the capacitor is used under oily, dusty and/or moist circumstances, oil, dust and/or moisture will be deposited on the exposed upper surface of the filler 46, the exposed surface of the rods 41 and 42, and the inner and outer surfaces of the upper cover 43. Especially, a large amount of oil, dust and/or moisture is apt to be deposited on the surface of the filler 46, because a recess is formed by the surface of the filler 46 and the perpendicular wall of the cover 43. This leads to a substantial reduction in the surface resistance of the path P1 from the rods 41 and 42, via the surface of the filler 46 and the inner and outer surfaces of the cover 43, to the ground conductor 37. In other words, the insulation creeping distance of the path becomes relatively short, as shown by a line P2 in Fig. 3, due to oil, dust and/or moisture deposited in the recess. The discharge initiating voltage depends on the magnitude of the insulation creeping distance.

Consequently, when a large amount of oil or the like is deposited in the recess, the creeping distance or the surface resistance is reduced and a discharge along the path is therefore likely to be initiated even with a relatively low voltage applied to the capacitor.

As regards this disadvantage, it might be easily decided that the portion of the upper cover 43 projecting upwardly beyond the exposed surface of the filler 46 should be removed, so that there is no recess into which oil or the like may be deposited. However, such an operation is not adequate, because the insulation creeping distance will be reduced by the length of the creeping path previously provided by the removed projecting portion of the upper cover 43.

Secondly, the conductive rods 41 and 42 are integrally formed with the tabs 41a and 42a, respectively. The tabs 41a and 42a are produced by compression moulding. In this moulding process there is a possibility that some distortion may be generated at the portions of the rods which are close to the tabs. The distortion of the conductive rods 41 and 42 may bring about non-uniformity of the shrinkage stress in the injected filler 47. This leads to deterioration of the thermal properties of the capacitor.

It is an object of the present invention to provide an improved through-type twin capacitor.

According to the invention there is provided a through-type twin capacitor comprising a ground conductor having a plate portion and a raised portion raised from the plate portion, the raised portion having a generally elliptical through hole; a generally elliptical ceramic body having a pair of separated electrodes deposited on a surface and a common electrode deposited on its opposite surface, the ceramic body, the separated electrodes and the common electrode each having corresponding through holes in their thickness which form a pair of common through holes, the ceramic body being mounted on the raised portion so that the common electrode contacts the raised portion; a pair of metallic caps each of which has a through hole and is mounted on the corresponding separated electrode; a pair of conductive rods penetrating the through holes of the caps, the corresponding common through holes and the elliptical through hole of the raised portion; a first generally elliptical insulating sleeve positioned adjacent the ground conductor with the upper portion of the outer wall of the sleeve engaging the inner surface of the raised portion; a second generally elliptical insulating sleeve positioned adjacent the upper surface of the ground conductor with the lower portion of the inner wall of the sleeve engaging with the outer wall of the raised portion; a pair of insulating tubes covering the conductive rods and, insulating fillers individually injected into the space defined by the first and second sleeves, characterised in that the tubes extend beyond the lower free end of the first sleeve.

Embodiments of the invention will now be described, by way of example, with reference to the accompanying drawings, wherein:

Fig. 1 is an exploded perspective view of a conventional through-type twin capacitor as described above,

Fig. 2 shows a vertical section through the capacitor of Fig. 1,

Fig. 3 is an exploded perspective view of another conventional through-type twin capacitor as described above,

Fig. 4 shows a vertical section through the capacitor of Fig. 3,

Fig. 5 is an exploded perspective view of an embodiment of the invention,

Fig. 6 shows a vertical section through the capacitor of Fig. 5,

Fig. 7 is a graph for illustrating an advantage of the configuration of Figs. 5 and 6, as compared with the conventional capacitor of Figs. 1 and 2,

Fig. 8 is an exploded perspective view of another embodiment of the invention,

Fig. 9 shows a vertical section through the capacitor of Fig. 8,

Fig. 10 shows a variation of the configuration in Figs. 8 and 9,

Fig. 11 is a perspective view of a tab terminal used in the capacitor of Fig. 10,

Fig. 12 is an exploded perspective view of a further embodiment of the invention,

Fig. 13 shows a vertical section through the capacitor of Fig. 12, and

Fig. 14 shows a vertical section of the capacitor of Fig. 12 taken at 90° to that of Fig. 13.

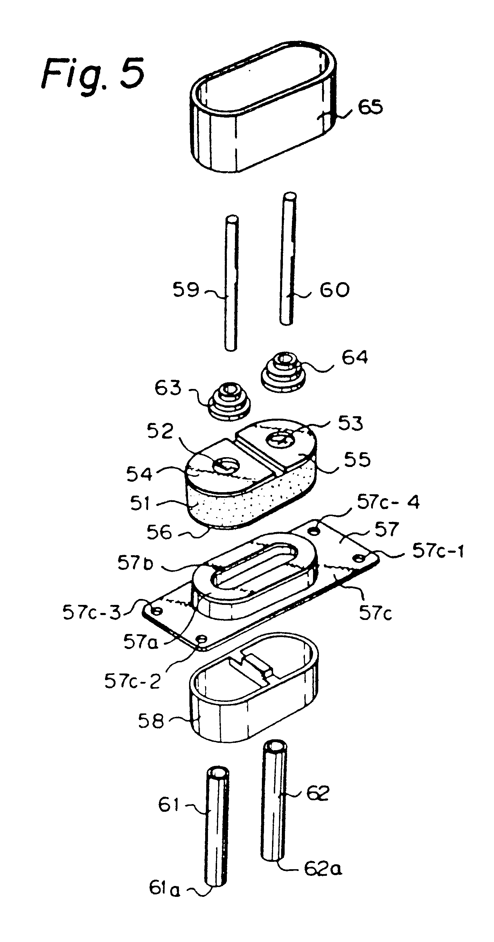

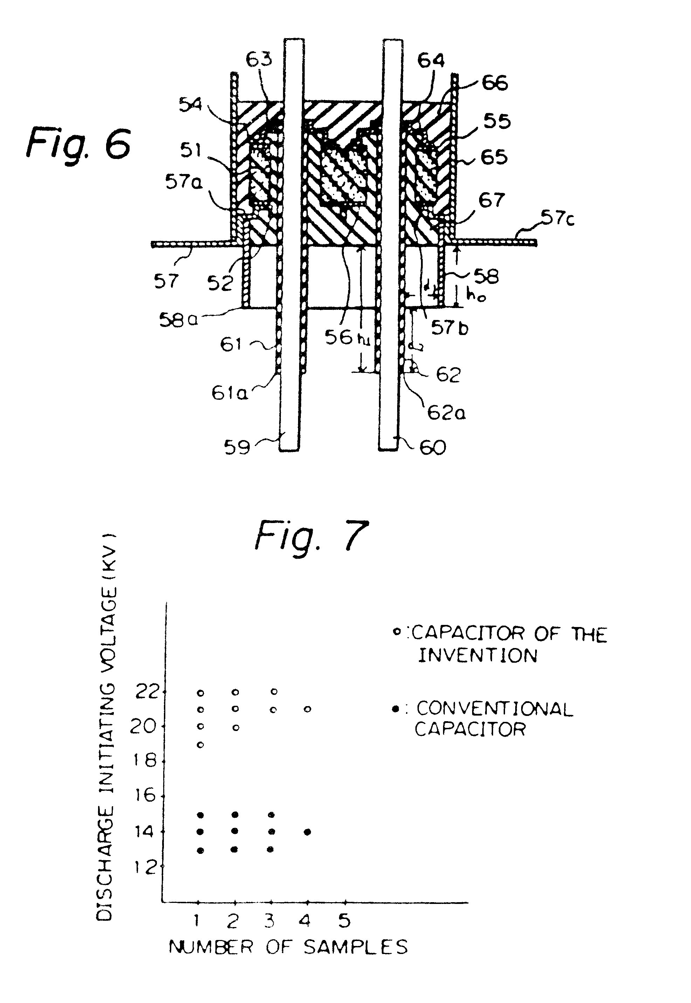

Referring to Figs. 5 and 6, an elliptical ceramic body 51 of a column shaped configuration has a pair of through holes 52 and 53 in its thickness. On the upper surface of the ceramic body 51 there are mounted a pair of spaced apart surface electrodes 54 and 55 which have corresponding through holes, and on the lower surface thereof there is mounted a common surface electrode 56 having corresponding through holes.

A ground conductor 57 has a rectangular conductive plate 57c and a raised conductive portion 57a. The plate 57c has four through holes 57c-1 and 57c-4 for fixing the capacitor to a filter housing (not shown) by means of screws. The raised portion 57a has a generally elliptical through hole 57b at its centre. The common electrode 56 is brought into contact with the raised portion 57a of the ground conductor 57. A pair of metallic caps 63 and 64, each of which has a through hole, are attached to the surface electrodes 54 and 55, respectively, by soldering. A pair of cylindrical conductive rods 59 and 60 are inserted into the metallic caps 63 and 64, the corresponding common through holes 52 and 53 of the electrodes (54-56) and ceramic body 51 and the elliptical through hole 57b of the ground conductor 57. The diameter of each of the holes 52 and 53 is larger than that of each conductive rod 59, 60. The diameter of the hole of each of the caps 63 and 64 is slightly larger than that of each rod. The caps 63 and 64 are soldered to the rods 59 and 60, respectively. An elliptical cylindrical sleeve 58, made of ceramic material or of insulating resin, such as epoxy resin or polybutylene terephthalate, is attached to the ground conductor 57 so that the upper portion of the outer wall of the sleeve 58 engages with the inner surface of the raised portion 57a. The sleeve 58 has a similar configuration to the cover 8 described above. An upper elliptical cylindrical sleeve 65, which may be made of the same material as that of the lower sleeve 58, is mounted on the upper surface of the ground conductor 57c so that the lower portion of the inner wall of the sleeve 65 engages with the outer wall of the raised portion 57a. The upper cover 65 encloses the ceramic body 51, the metallic caps 63 and 64 and portions of the conductive rods 59 and 60.

The conductive rods 59 and 60 are partially covered with flexible insulating tubes 61 and 62, respectively, made of, for example, silicon rubber. The upper ends of the insulating tubes 61 and 62 butt against the horizontal inner surface of the metallic caps 63 and 64. The other ends 61a and 62a of the insulating tubes 61 and 62 project appreciably beyond the lower free end 58a of the lower sleeve 58. In other words, the insulating tubes 61 and 62 extend beyond the lower edge of the sleeve 58. That is, the distance $h_0$ of the end of the sleeve 58 from the ground conductor 57 is less than the distance $h_1$ of the ends of the tubes 61 and 62 from the ground conductor 57. Preferably, the amount of the projection of the tubes, i.e. the distance $d_2$ which corresponds to the difference between $h_0$ and $h_1$, is at least larger than a distance $d_1$ which is the horizontal distance between the vertical wall of the sleeve 58 and the surface of the tube opposite to the wall.

In practice, the magnitude of the extension of the insulating tubes 61 and 62 depends upon several factors such as the voltage applied to the capacitor and the size of the capacitor. The extension of the insulating tubes 61 and 62 beyond the free end of the lower sleeve 58 makes it possible to reduce the influence of oil, dust and/or moisture deposited on the lower side of the capacitor. In other words, the extension of the insulating tubes reduces the possibility of a discharge occurring between the lower portions of the conductive rods 59 , 60 which are not covered with the tubes and the ground conductor 57, and thereby provides a higher electrical strength of the capacitor. Of course, fillers 66 and 67 are injected into the upper and lower sleeves 65 and 58, respectively.

Fig. 7 is a graph illustrating an advantage of the invention, as compared with the conventional capacitor shown in Figs. 3 and 4, on the basis of experimental results. In this figure the ordinate shows the voltage at which a discharge is initiated, and the abscissa shows the number of capacitors corresponding to each of the discharge initiating voltages. The experiment used ten samples having the configuration as shown in Figs. 5 and 6, and also ten samples having the configuration as shown in Figs. 3 and 4. Furthermore, the frequency of the alternating voltage applied to the capacitors was set at 50Hz. As apparent from the graph, the discharge initiating voltages of the conventional capacitors are in a range from 13kV to 15kV. On the other hand, the discharge initiating voltages of the present capacitors are in a range from 19kV to 22kV. Therefore, it will be appreciated that the present invention makes it possible to improve the electric strength of the capacitor considerably.

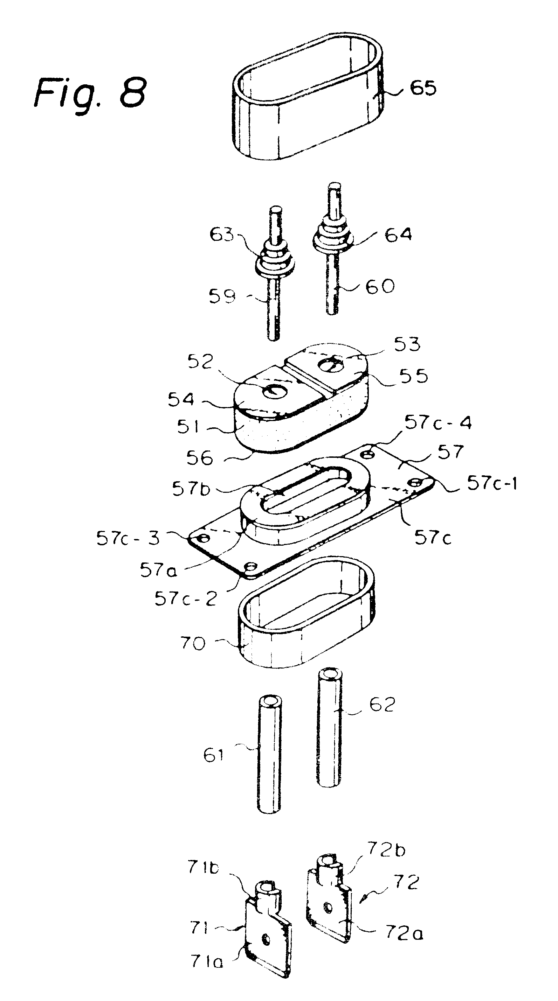

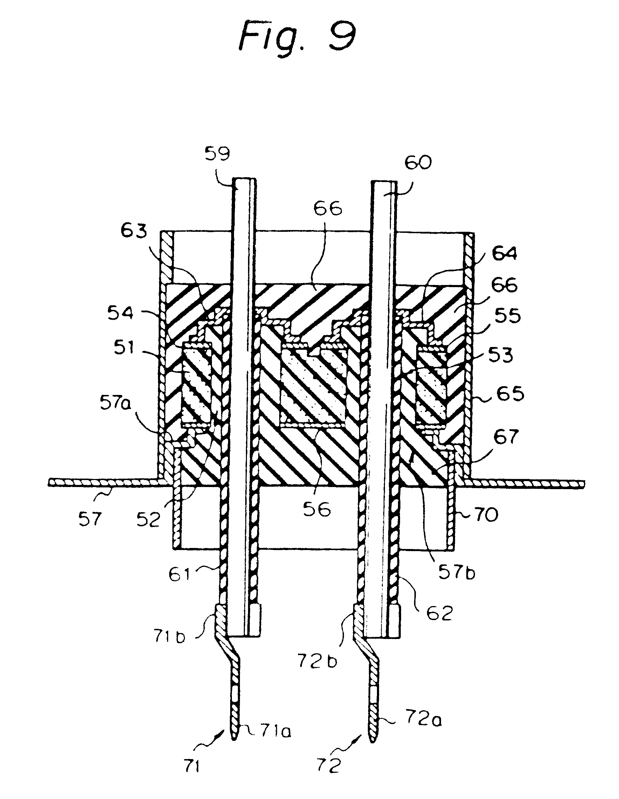

Another embodiment of the invention is illustrated in Figs. 8 and 9. In those figures, the same reference numerals as those in the previous drawings denote the same members. An essential feature illustrated in Figs. 8 and 9 is that tab terminals 71 and 72 are formed separately from conductive rods 63 and 64. It should be noted that the tabs 21 and 22 of the conventional capacitor in Figs. 1 and 2 are integral with the rods 11 and 12, respectively. The rods 59 and 60 with the caps 63 and 64 are inserted into the corresponding common through holes 52 and 53 of the electrodes (54-56) and ceramic body 51 and the hole 57b of the ground conductor 57. The rods 59 and 60 are partially covered with the insulating tubes 61 and 62, respectively. Those tubes extend considerably beyond the free end of the lower sleeve 70 in order to improve the electrical strength of the capacitor. The tabs 71 and 72 are then attached to the rods 59 and 60, respectively. The tab 71 comprises a plate 71a and a C-shaped portion 71b of diameter slightly larger than that of the cylindrical rod 59. The C-shaped portion 71b is located on the lower end of the rod 60, and is fixed thereto by welding or crimping. Likewise, the tab 72 comprises a plate portion 72a and a C-shaped portion 72b. The attachment of the tabs 71 and 72 to the corresponding rods 59 and 60 is effected after the insulating fillers 66 and 67 are injected into the upper sleeve 65 and the lower sleeve 70, respectively. It is therefore possible, during the injecting operation of the filler, to avoid epoxy resin of the filler being accidentally deposited on the tabs 71 and 72.

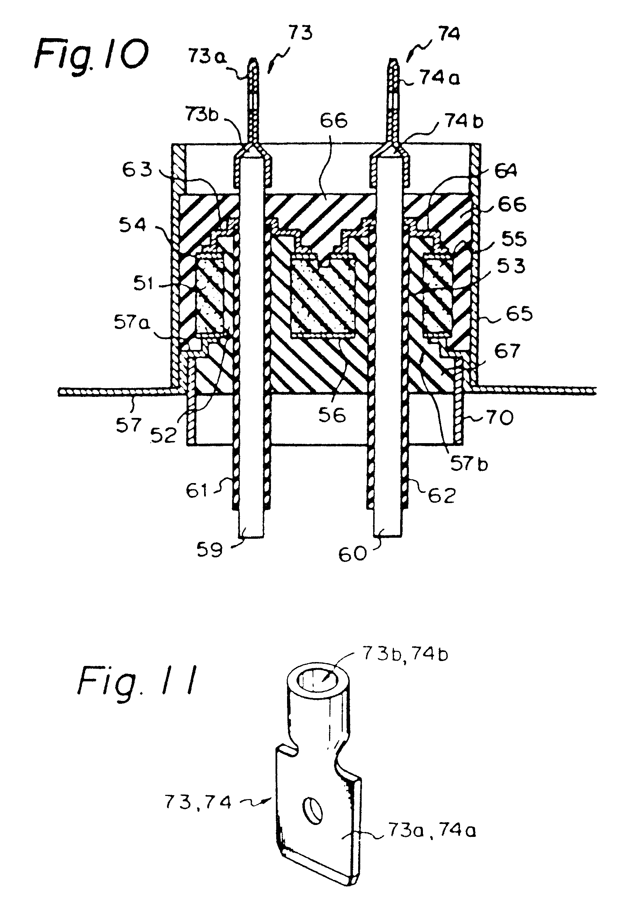

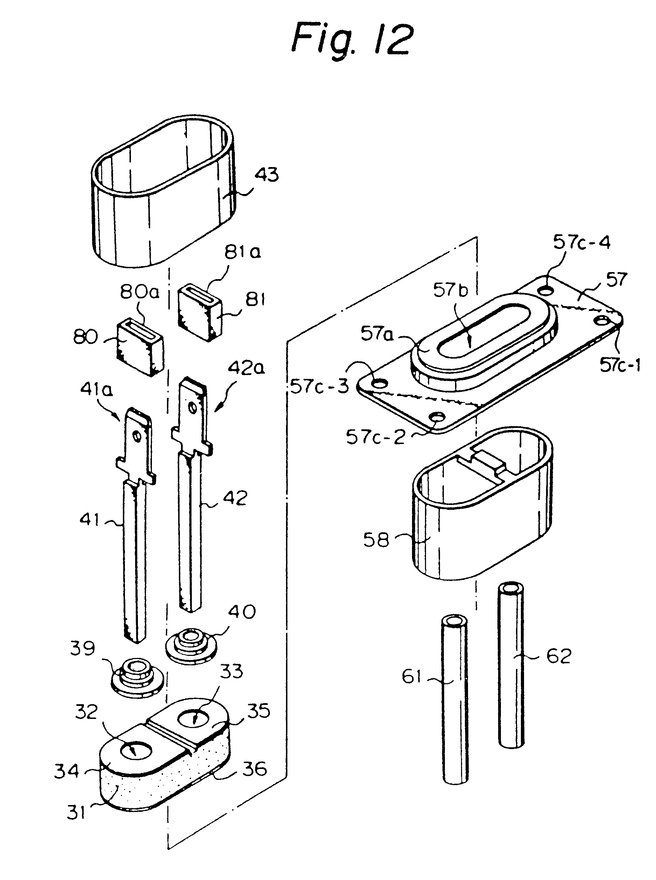

Fig. 10 illustrates a variation of the configuration of Figs. 8 and 9, in which tab terminals 73 and 74 are attached to the upper ends of the conductive rods 59 and 60, instead of the tabs 71 and 72, respectively, which are attached to the lower ends thereof in the capacitor of Figs. 8 and 9. As illustrated in Fig. 11, the tabs 73 and 74 comprise plate portions 73a and 74a and hollow cylindrical portions 73b and 74b, which accommodate the upper ends of the rods 59 and 60, respectively. Again, the attachment of the tabs 73 and 74 to the rods 59 and 60 is effected after the operation of injecting the filler 66.

By use of the embodiments of Figs. 9 and 10, productivity on producing the two different types of capacitors can be improved, because the tab terminals can be attached to either end of the conductive rods.

In addition, non-informity of the shrinkage stress in the filler due to distortion of the rods can be avoided, because the tab terminals 73 and 74 are attached to the rods 59 and 60, respectively, after the fillers 66 and 67 are injected.

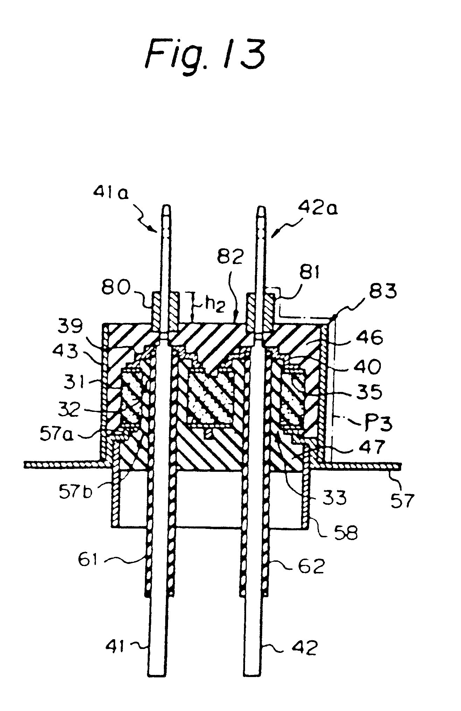

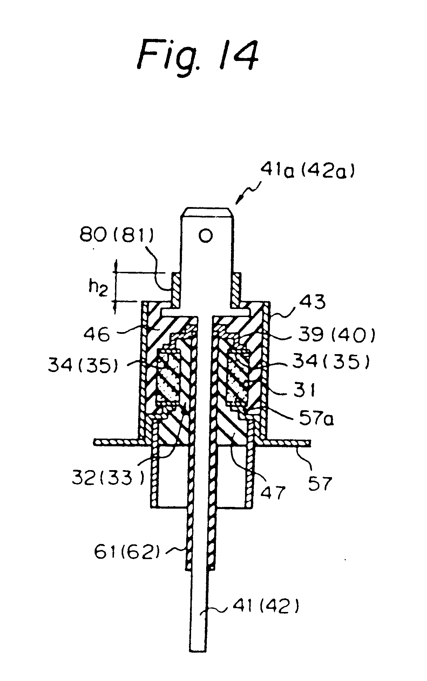

A further embodiment is illustrated in Figs. 12 to 14, in which the same reference numerals as those in the previous drawings relate to the same members. An important feature of this embodiment is the presence of insulating covers or sleeves 80 and 81 which are attached to the tab terminals 41a and 42a of the conductive rods 41 and 42, respectively. The insulating sleeves 80 and 81 are made of inorganic insulating material such as ceramics, thermosetting resin such as epoxy resin, or silicon rubber. The insulating sleeves 80 and 81 have rectangular through holes 80a and 81a which the tabs 80 and 81, respectively, penetrate. The lower edge of each of the insulating sleeves 80 and 81 is embedded in the filler 46 which is injected into the upper sleeve 43. The insulating sleeves 80 and 81 project upwardly beyond the surface of the filler 46 by a height $h_2$, as shown in Fig. 13. The level of the filler 46 coincides with the free end of the upper sleeve 43, whereas the free end of a conventional upper sleeve 43 would project upwardly over the upper surface of the filler 46, as described previously. That is, no recess is provided above the surface of the filler 82 in the present embodiment. Consequently, deposition of oil, dust and/or moisture on the surface of the filler 82 is impeded. In addition, the insulation creeping distance between the tab terminals 41a and 42a and the ground conductor 57 is sufficiently elongated due to the insulating sleeves 80 and 81, as shown by the symbol P3 in Fig. 13. As a result, this embodiment makes is possible to prevent a reduction in the electric strength resulting from oil, dust and/or moisture.

A description will now be given of an advantage of the embodiment of Figs. 12 to 14, as compared with the conventional capacitor of Fig. 3, on the basis of experimental results. Three samples of each of the present and conventional capacitors were examined. The experiment was effected under the condition that a high voltage in excess of 20kV was repeatedly applied to the sample, with some moisture deposited on the surface of the filler and the upper case thereof. The applications of the voltage were repeated until breakdown of the sample was initiated. Table 1 shows experimental results for the samples of conventional capacitors, while Table 2 shows the results for samples of the Figs. 12 to 14 embodiment.

Table 1

| Sample No. | Number of Applications of Voltage Required to Cause Breakdown |
|---|---|
| 1 | 6 |
| 2 | 5 |
| 3 | 7 |

Table 2

| Sample No. | Number of Applications of Voltage Required to Cause Breakdown |
|---|---|
| 1 | more than 120 |
| 2 | more than 120 |
| 3 | more than 120 |

It will be apparent from the above tables that the configuration illustrated in Figs. 12 to 14 is very effective in increasing the electrical strength of the capacitor.

**Claims**

1. A through-type twin capacitor comprising a ground conductor (57) having a plate portion (57c) and a raised portion (57a) raised from the plate portion (57c), the raised portion (57a) having a generally elliptical through hole (57b); a generally elliptical ceramic body (51) having a pair of separated electrodes (54,55) deposited on a surface and a common electrode (56) deposited on its opposite surface, the ceramic body (51), the separated electrodes (54,55) and the common electrode (56) each having corresponding through holes in their thickness which form a pair of common through holes (52,53), the ceramic body (51) being mounted on the raised portion (57a) so that the common electrode (56) contacts the raised portion (57a); a pair of metallic caps (63,64) each of which has a through hole and is mounted on the corresponding separated electrode (54,55); a pair of conductive rods (59,60) penetrating the through holes of the caps (63,64), the corresponding common through holes (52,53) and the elliptical through hole (57b) of the raised portion (57a); a first generally elliptical insulating sleeve (58) positioned adjacent the ground conductor (57) with the upper portion of the outer wall of the sleeve (58) engaging the inner surface of the raised portion (57a); a second generally elliptical insulating sleeve (65) positioned adjacent the upper surface of the ground conductor (57) with the lower portion of the inner wall of the sleeve (65) engaging with the outer wall of the raised portion (57a); a pair of insulating tubes (61,62) covering the conductive rods (59,60) and, insulating fillers (66,67) individually injected into the space defined by the first and second sleeves (58,65), characterised in that the tubes (61,62) extend beyond the lower free end (58a) of the first sleeve (58).

**2.** A capacitor according to claim 1, characterized in that tab terminals (71,72) for external connections are attached to an end of each of the conductive rods (59,60).

**3.** A capacitor according to claim 1 or 2, characterized in that the conductive rods (41,42) are partially covered with insulating sleeves (80,81) in such a way that one end of each sleeve is embedded in the filler (46) in the second sleeve (43), and the other end thereof projects beyond the exposed surface (82) of the filler in the second sleeve.

**4.** A capacitor according to claim 3, characterized in that the level of the exposed surface (82) of the filler (46) in the second sleeve (43) coincides with the free end of the second sleeve.

## Revendications

**1.** Condensateur double du modèle direct comportant un conducteur de mise à la masse (57) comportant une portion en plaquette (57c) et une portion surélevée (57a) par rapport à la plaquette (57c), ladite portion surélevée comportant un trou sortant généralement elliptique; un corps généralement elliptique de céramique (51) ayant une paire d'électrodes séparées (54,55) posées sur une surface et une électrode commune (56) posée sur la surface opposée, chaque élément de corps de céramique (51), d'électrodes séparées (54,55) et d'électrode commune (56) ayant des trous sortants correspondants en leur épaisseur formant une paire de trous communs sortants (52,53), le corps de céramique (51) étant monté sur la portion surélevée (57a) de telle manière que l'électrode commune (56) soit en contact avec la portion surélevée (57a); une paire de capots métalliques (63,64) chacun avec un trou sortant et situé sur l'électrode séparée correspondante (54,55); une paire de tiges conductrices (59,60) passant par les trous sortants de capot (63,64), les trous sortants correspondants (52,53) et le trou elliptique sortant (57b) de la portion surélevée (57a); un premier manchon isolant (58) généralement elliptique situé adjacent au conducteur de masse (57), la portion supérieure de paroi extérieure du manchon (58) étant engagée avec la surface intérieure de la portion surélevée (57a); un deuxième manchon isolant (65) généralement elliptique situé adjacent à la portion inférieure de paroi intérieure du manchon (65) étant engagé avec la paroi extérieure de portion surélevée (57a); une paire de tubes isolants (61,62) recouvrant les tiges conductrices (59,60) et des éléments de bourrage (66,67) injectés individuellement dans le vide défini par les premier et deuxième manchons (58,65), caractérisé en ce que les tubes (61,62) s'étendent au delà de l'extrémité libre inférieure (58a) du premier manchon (58).

**2.** Condensateur selon la revendication 1, caractérisé en ce que des bornes en languette (71,72) de raccords extérieurs sont posées sur une extrémité de chaque tige conductrice (59,60).

**3.** Condensateur selon la revendication 1 ou 2, caractérisé en ce que les tiges conductrices (41,42) sont recouvertes partiellement par des manchons isolants (80,81) de telle façon qu'une extrémité de chaque manchon soit encastrée dans l'élément de bourrage (46) du deuxième manchon (43), et son autre extrémité soit en saillie au delà de la surface exposée (82) du bourrage de deuxième manchon.

**4.** Condensateur selon la revendication 3, caractérisé en ce que le niveau de surface exposée (82) du bourrage (46) de deuxième manchon (43) coïncide avec l'extrémité libre du deuxième manchon.

## Patentansprüche

**1.** Zwillingskondensator vom Durchführungstyp mit einem Boden-Leiter (57), der einen Plattenteil (57c) und einen vom Plattenteil (57c) hochstehenden erhabenen Teil (57a) aufweist, wobei der erhabene Teil (57a) ein im wesentlichen elliptisches Durchgangsloch (57b) aufweist; einem im wesentlichen elliptischen keramischen Körper (51) mit einem Paar getrennter Elektroden (54, 55), die auf einer Oberfläche aufgebracht sind, und einer gemeinsamen Elektrode (56), die auf seiner gegenüberliegenden Oberfläche aufgebracht ist, wobei der keramische Körper (51), die getrennten Elektroden (54, 55) und die gemeinsame Elektrode (56) jeweils entsprechende Durchgangslöcher in ihrer Dicke aufweisen, die ein Paar gemeinsamer Durchgangslöcher (52, 53) bilden, und der keramische Körper (51) auf dem erhabenen Teil (57a) so montiert ist, daß die gemeinsame Elektrode (56) den erhabenen Teil (57a) kontaktiert; einem Paar metallischer Kappen (63, 64), von denen jede ein Durchgangsloch aufweist und auf der entsprechenden getrennten Elektrode (54, 55) montiert ist; einem Paar leitender Stifte (59, 60), die die Durchgangslöcher der Kappen (63, 64), die entsprechenden gemeinsamen Durchgangslöcher (52, 53) und das elliptische Durchgangsloch (57b) des erhabenen Teils (57a) durchsetzen; einer ersten im wesentliche elliptischen isolierenden Hülse (58), die nahe dem Boden-Leiter (57) angeordnet ist, wobei der obere Teil der äußeren Wand der Hülse (58) an der inneren Oberfläche des erhabenen Teils (57a) anliegt; einer zweiten im wesentlichen elliptischen isolierenden Hülse (65), die nahe der oberen Oberfläche des Bodenleiters (57) angeordnet ist, wobei der untere Teil der inneren Wand der Hülse (65) an der äußeren Wand des erhabenen Teils (57a) anliegt; einem Paar isolierender Rohre (61, 62), die die leitenden Stifte (59, 60) abdecken, und isolierenden Füllmaterialien (66, 67), die individuell in den durch die erste und zweite Hülse (58, 65) begrenzten Raum eingespritzt sind, dadurch gekennzeichnet, daß die Rohre (61, 62) über das untere freie Ende (58a) der ersten Hülse (58) hinausragen.

2.  Kondensator nach Anspruch 1, dadurch gekennzeichnet, daß Anschlußfahnen (71, 72) für externe Verbindungen an einem Ende jedes leitenden Stiftes (59, 60) angebracht sind.

3.  Kondensator nach Anspruch 1 oder 2, dadurch gekennzeichnet, daß die leitenden Stifte (41, 42) teilweise durch isolierende Hülsen (80, 81) so abgedeckt sind, daß das eine Ende jeder Hülse in dem Füllmaterial (46) in der zweiten Hülse (43) eingebettet ist und ihr anderes Ende über die freiliegende Oberfläche (82) des Füllmaterials in der zweiten Hülse hinausragt.

4.  Kondensator nach Anspruch 3, dadurch gekennzeichnet, daß das Niveau der freiliegenden Oberfläche (82) des Füllmaterials (46) in der zweiten Hülse (43) mit dem freien Ende der zweiten Hülse zusammenfällt.

# Fig. 1

## PRIOR ART

# Fig. 2

PRIOR ART

# Fig. 3

PRIOR ART

41a
42a
41
42
43
11a
11a
39
40
33
35
32
31
34
36
37b
37c
37c-3
37c-1
37
37a
37c-2
38

# Fig. 4

PRIOR ART

*Fig. 5*

## Fig. 6

## Fig. 7

○: CAPACITOR OF THE INVENTION

●: CONVENTIONAL CAPACITOR

# Fig. 8

# Fig. 9

Fig. 10

Fig. 11

EP 0 229 733 B1

# Fig. 12

18

# Fig. 13

# Fig. 14